# EUROPEAN PATENT APPLICATION

(11) **EP 4 642 070 A1**
(43) Date of publication of application: **29.10.2025**
(21) Application number: 23905764.9
(22) Date of filing: 12.12.2023
(51) Int. Cl.: H04W 12/06

(54) **INFORMATION PROCESSING METHOD, APPARATUS, AND READABLE STORAGE MEDIUM**

(30) Priority: 23.12.2022 CN 202211664493
(71) Applicant: Datang Mobile Communications Equipment Co., Ltd., Beijing 100085 (CN)
(72) Inventor: ZHANG, Yujie, Beijing 100085 (CN); BAI, Wei, Beijing 100085 (CN)
(74) Representative: Studio Torta S.p.A.
(86) International application number: PCT/CN2023/138173
(87) International publication number: WO 2024/131598

(57) **Abstract**

The present disclosure relates to the technical field of communications. Disclosed are an information processing method, an apparatus, and a readable storage medium, which can ensure the communication reliability. The method comprises: sending identity information of a terminal to a network device, wherein the identity information comprises: a terminal identifier; or the identity information comprises: a first field, a terminal identifier, and a second field, the first field indicating one or more of the following: whether the identity information comprises the second field; and the content of the second field

## Description

### CROSS-REFERENCE TO RELATED APPLICATION

The present disclosure claims the priority of Chinese Patent Application No. 202211664493.X entitled " Information Processing Method, Apparatus, and Readable Storage Medium," filed December 23, 2022, the disclosure of which is incorporated herein by reference in its entirety.

### TECHNICAL FIELD

The present disclosure relates to the field of communications technologies, in particular, relates to an information processing method and apparatus, and a readable storage medium.

### BACKGROUND

With the development of mobile communication, a plurality of international organizations begin to study a new wireless communication system, that is, 6G. The increase of the number of connection devices is one of the important driving forces of 6G.

In a 6G application scenario of mass terminals, for a condition in which no connection is established between the terminal and the network device for communication, when the terminal in a Radio Resource Control (RRC) idle state (IDLE) actively initiates communication to the network device, the network device may not confirm the identity of the terminal, thereby affecting communication reliability.

### SUMMARY

Embodiments of the present disclosure provide an information processing method and apparatus, and a readable storage medium, to ensure communication reliability.

In a first aspect, an information processing method applied to a terminal is provided in the embodiments of the present disclosure. The method includes: sending identity information of the terminal to a network device, wherein the identity information includes a terminal identifier; or, the identity information includes a first field, a terminal identifier, and a second field, and the first field indicates one or more of the following: whether the identity information includes the second field; content of the second field; wherein sending the identity information of the terminal to the network device includes: sending the identity information of the terminal to the network device before or during Uncoordinated Random Access And Transmission (URAT).

Optionally, when sending the identity information of the terminal to the network device before the URAT, the method further includes: scrambling to-be-sent UART data by using some or all of the identity information; sending the scrambled UART data to the network device.

Optionally, when sending the identity information of the terminal to the network device before the URAT, sending the identity information of the terminal to the network device includes: sending the identity information to the network device through a radio resource control (RRC) message on a signaling radio bearer 0 (SRB 0).

Optionally, when sending the identity information of the terminal to the network device during the URAT, sending the identity information of the terminal to the network device includes: sending URAT data to the network device, wherein a preamble portion of the URAT data carries the identity information, or a physical uplink shared channel (PUSCH) data portion of the URAT data carries the identity information.

Optionally, when the preamble portion of the URAT data carries the identity information, the method further includes: scrambling the PUSCH data portion of the URAT data by using some or all of the identity information.

Optionally, the preamble portion carries the identity information of one or more terminals.

In a second aspect, an information processing method applied to a network device is provided in the embodiments of the present disclosure. The method includes: receiving identity information from a terminal, wherein the identity information includes a terminal identifier; or, the identity information includes a first field, a terminal identifier, and a second field, and the first field indicates one or more of the following: whether the identity information includes the second field; the content of the second field; wherein receiving the identity information from the terminal includes: receiving the identity information from the terminal before or during URAT.

Optionally, receiving the identity information from the terminal before the URAT includes: receiving the identity information from the terminal through an RRC message on SRB 0 before the URAT.

Optionally, the method further includes: receiving scrambled UART data from the terminal; when authentication of the identity information is passed, descrambling the scrambled UART data by using some or all of the identity information.

Optionally, receiving the identity information from the terminal during the URAT by the network device includes: receiving URAT data from the terminal; obtaining the identity information from a preamble portion of the URAT data, or obtaining the identity information from a PUSCH data portion of the URAT data.

Optionally, the preamble portion carries identity information of one or more terminals.

Optionally, when obtaining the identity information from the preamble portion of the URAT data, the method further includes: receiving scrambled PUSCH data from the terminal; descrambling the scrambled PUSCH data by using some or all of the identity information.

Optionally, when the identity information includes the first field, the terminal identifier, and the second field, the method further includes: determining content of the second field according to the first field.

In a third aspect, an information processing apparatus applied to a terminal is provided in the embodiments of the present disclosure, wherein the apparatus includes a memory, a transceiver, and a processor; the memory is configured to store a computer program, the transceiver is configured to transmit and receive data under control of the processor; and the processor is configured to read the computer program in the memory and perform following operations: sending identity information of the terminal to a network device, wherein the identity information includes a terminal identifier; or, the identity information includes a first field, a terminal identifier, and a second field, and the first field indicates one or more of the following: whether the identity information includes the second field; the content of the second field; wherein sending the identity information of the terminal to the network device includes: sending the identity information of the terminal to the network device before or during URAT.

Optionally, when sending the identity information of the terminal to the network device before the URAT, the processor reads the program and executes the following steps: scrambling to-be-sent UART data by using some or all of the identity information; sending the scrambled UART data to the network device.

Optionally, when sending the identity information of the terminal to the network device before the URAT, the processor reads the program and executes the following steps: sending the identity information to the network device through a RRC message on a SRB 0.

Optionally, when sending the identity information of the terminal to the network device during the URAT, the processor reads the program and executes the following steps: sending URAT data to the network device, wherein a preamble portion of the URAT data carries the identity information, or a physical uplink shared channel (PUSCH) data portion of the URAT data carries the identity information.

Optionally, when the preamble portion of the URAT data carries the identity information, the processor reads the program and executes the following steps: scrambling the PUSCH data portion of the URAT data by using some or all of the identity information.

Optionally, the preamble portion carries the identity information of one or more terminals.

In a fourth aspect, an information processing apparatus applied to a network device is provided in the embodiments of the present disclosure, wherein the apparatus includes a memory, a transceiver, and a processor, the memory is configured to store a computer program; the transceiver is configured to transmit and receive data under control of the processor; and the processor configured to read the computer program in the memory and perform the following operations: receiving identity information from a terminal, wherein the identity information includes a terminal identifier; or, the identity information includes a first field, a terminal identifier, and a second field, and the first field indicates one or more of the following: whether the identity information includes the second field; the content of the second field; wherein receiving the identity information from the terminal includes: receiving the identity information from the terminal before or during URAT.

Optionally, the processor reads the program and executes the following steps:
receiving the identity information from the terminal through an RRC message on SRB 0 before the URAT.

Optionally, the processor reads the program and executes the following steps: receiving scrambled UART data from the terminal; when authentication of the identity information is passed, descrambling the scrambled UART data by using some or all of the identity information.

Optionally, the processor reads the program and executes the following steps: receiving URAT data from the terminal; obtaining the identity information from a preamble portion of the URAT data, or obtaining the identity information from a PUSCH data portion of the URAT data.

Optionally, the preamble portion carries identity information of one or more terminals.

Optionally, when obtaining the identity information from the preamble portion of the URAT data, the processor reads the program and executes the following steps: receiving scrambled PUSCH data from the terminal; descrambling the scrambled PUSCH data by using some or all of the identity information.

Optionally, when the identity information includes the first field, the terminal identifier, and the second field, the processor reads the program and executes the following steps: determining content of the second field according to the first field.

In a fifth aspect, an information processing apparatus applied to a terminal is provided in the embodiments of the present disclosure, wherein the apparatus includes: a first sending unit, configured to send identity information of the terminal to a network device, wherein the identity information includes a terminal identifier; or, the identity information includes a first field, a terminal identifier, and a second field, and the first field indicates one or more of the following: whether the identity information includes the second field; content of the second field; the first sending unit is further configured to send the identity information of the terminal to the network device before or during URAT.

Optionally, the apparatus further includes: a first processing unit, configured to scramble to-be-sent UART data by using some or all of the identity information; a second sending unit, configured to send the scrambled UART data to the network device.

Optionally, the first sending unit is further configured to sending the identity information to the network device through a RRC message on SRB 0.

Optionally, the first sending unit is further configured to send URAT data to the network device, wherein a preamble portion of the URAT data carries the identity information, or a physical uplink shared channel (PUSCH) data portion of the URAT data carries the identity information.

Optionally, the apparatus further includes: a second processing unit, configured to scramble the PUSCH data portion of the URAT data by using some or all of the identity information.

Optionally, the preamble portion carries the identity information of one or more terminals.

In a sixth aspect, an information processing apparatus applied to a network device is provided in the embodiments of the present disclosure, wherein the apparatus includes: a first receiving unit, configured to receive identity information from a terminal, wherein the identity information includes a terminal identifier; or, the identity information includes a first field, a terminal identifier, and a second field, and the first field indicates one or more of the following: whether the identity information includes the second field; content of the second field: wherein the first receiving unit is further configured to receive the identity information from the terminal before or during URAT.

Optionally, the first receiving unit is further configured to receiving the identity information from the terminal through an RRC message on SRB 0 before the URAT.

Optionally, the apparatus further includes: a second receiving unit, configured to receive scrambled UART data from the terminal; a first processing unit configured to when authentication of the identity information is passed, descramble the scrambled UART data by using some or all of the identity information.

Optionally, the first receiving unit further includes: a first receiving subunit, configured to receiving URAT data from the terminal; a first obtaining subunit, configured to obtain the identity information from a preamble portion of the URAT data, or obtain the identity information from a PUSCH data portion of the URAT data.

Optionally, the preamble portion carries identity information of one or more terminals.

Optionally, the apparatus further includes: a third receiving unit, configured to receive scrambled PUSCH data from the terminal; a second processing unit, configured to descramble the scrambled PUSCH data by using some or all of the identity information.

Optionally, when the identity information includes the first field, the terminal identifier, and the second field, the apparatus further includes: a third processing unit, configured to determine content of the second field according to the first field.

In a seventh aspect, a processor-readable storage medium is provided in the embodiments of the present disclosure, wherein the processor-readable storage medium stores a computer program, and the computer program causes a processor to execute the method according to the above.

In this embodiment of the present disclosure, the identity information sent from the terminal to the network device includes the identity of the terminal, and therefore, the network device may accurately determine the identity of the terminal based on the terminal identifier, thereby ensuring the reliability of subsequent communication.

### BRIEF DESCRIPTION OF THE DRAWINGS

FIG. 1 is a first flowchart of an information processing method according to an embodiment of the present disclosure;
FIG. 2 is a second flowchart of an information processing method according to an embodiment of the present disclosure;
FIG. 3 is a first schematic diagram of a manner of sending identity information according to an embodiment of the present disclosure;
FIG. 4 is a second schematic diagram of a manner of sending identity information according to an embodiment of the present disclosure;
FIG. 5 is a third schematic diagram of a manner of sending identity information according to an embodiment of the present disclosure;
FIG. 6 is a first structural diagram of an information processing apparatus according to an embodiment of the present disclosure;
FIG. 7 is a second structural diagram of an information processing apparatus according to an embodiment of the present disclosure;
FIG. 8 is a third structural diagram of an information processing apparatus according to an embodiment of the present disclosure;
FIG. 9 is a fourth structural diagram of an information processing apparatus according to an embodiment of the present disclosure.

### DETAILED DESCRIPTION

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar. The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

The Uncoordinated Random Access and Transmission (URAT) technology does not require or only requires little coordination between the network and the terminal to support a huge amount of terminals. Since the URAT communication is an uncoordinated communication actively initiated by the terminal, no connection is established between the terminal and the network device, which is not point-to-point communication, and therefore, the network device cannot confirm the identity of the terminal. If the network device cannot determine the identity of the terminal, then on one hand, authentication and identification of the terminal cannot be performed, and existing encryption processing based on terminal identity information cannot be used; and on the other hand, the network device cannot determine which terminal device the received application data corresponds to, and further cannot determine which terminal device sends the data packet.

Embodiments of the present disclosure provide an information processing method and apparatus, to ensure communication reliability. The method and the apparatus are based on the same application concept, and because the method and the apparatus solve a similar principle of a problem, the implementation of the apparatus and the method may refer to each other, and details are not described herein again.

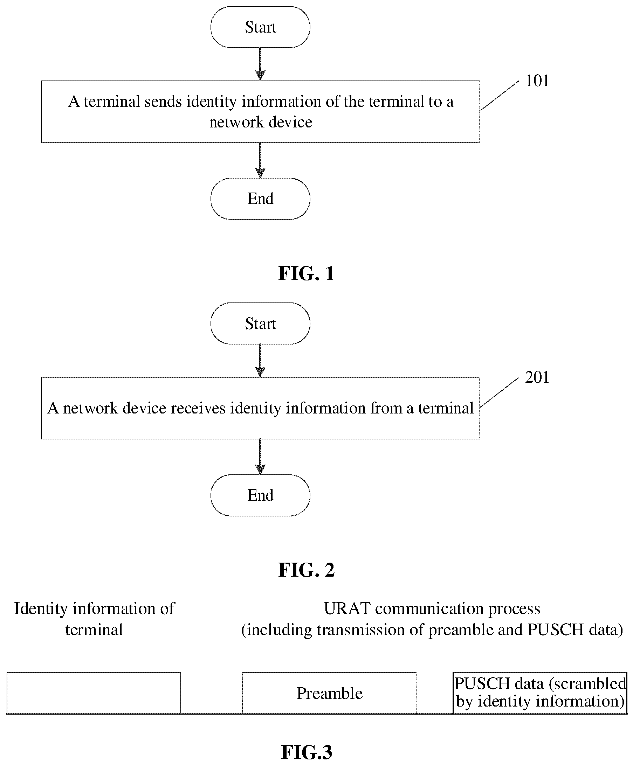

Referring to FIG. 1, FIG. 1 is a flowchart of an information processing method according to an embodiment of the present disclosure, as shown in FIG. 1, including the following steps:
Step 101: sending identity information of a terminal to a network device by the terminal.

In the embodiments of the present disclosure, the identity information of the terminal may only include the terminal identifier. The terminal identifier includes a terminal identifier that can be obtained in an RRC_IDLE state, for example, a 5G S-Temporary Mobile Subscription Identifier (5G-S-TMSI). In a specific application, some or all bits in the 5G-S-TMSI may be used as identity information of the terminal. Through the carried identifier of the terminal, the terminal may be uniquely identified, so that the network device associates the identity of the terminal with the data of the terminal. Optionally, the identity information of the terminal includes a first field, a terminal identifier, and a second field, where the first field indicates one or more of the following: whether the identity information includes the second field; and the content of the second field.

For example, the identity information of the terminal includes an indication field (i.e., a first field), a terminal identifier, and an additional field (i.e., a second field). The indication field is used to indicate content of an additional field in the identity information; or the indication field may only be used to indicate whether the identity information includes an additional field; or the indication field may indicate the above two cases at the same time. The additional field may include information other than the terminal identifier, such as data control information, application layer service data information, and the like. The terminal identifier may also be a 5G-S-TMSI or the like.

For example, when the value of the indication field is "0", there is no additional field; and when the value of the indication field is not "0", value of the indication field respectively corresponds to different additional field contents. For example, when the indication field is "1", it indicates that the additional field is data control information, and when the indication field is "2", it indicates that the additional field is application layer service data information. Therefore, necessary data control information, application layer service data information, and the like in the URAT communication can be transmitted through the additional field.

In the embodiment of the present disclosure, the terminal may send the identity information of the terminal to the network device before or during the URAT. If the terminal sends the identity information of the terminal to the network device before the URAT, the terminal may send the identity information to the network device through an RRC message on the SRBO. The RRC may reuse an existing RRC message, for example, may be an RRC setup request message (RRCSetupRequest); or a new RRC message that is defined to carry identity information of the terminal in the URAT communication is defined, for example, an RRC URAT request (RRCURATRequest).

Optionally, in this case, the terminal may further scramble To-be-sent UART data by using some or all of the identity information, and send the scrambled UART data to the network device, for example, the terminal may scramble the PUSCH data of the UART data, or scramble a cyclic redundancy check (CRC) check bit of the PUSCH data. In this way, the identity information of the terminal may be more accurately associated with the URAT communication process, so that the network device determines the URAT communication process corresponding to the terminal.

If the terminal sends the identity information of the terminal to the network device in a URAT communication process, the terminal may send URAT data (including a preamble and PUSCH data) to the network device, where a preamble portion of the URAT data carries the identity information, or a PUSCH data portion of the URAT data carries the identity information.

That is, the terminal may carry the identity information of the terminal in the URAT communication process (including the sending of the preamble and the PUSCH data), the identity information may be carried by the preamble, or may be carried by the PUSCH data.

If the identity information of the terminal is carried in the preamble, the terminal may further scramble the PUSCH data of the URAT data by using some or all of the identity information. For example, the CRC check bits of the PUSCH data are scrambled.

In the embodiments of the present disclosure, the preamble portion may carry the identity information of one or more terminals. If the identity information of the plurality of terminals is carried, communication resources may be further saved, and communication efficiency is improved.

In the URAT communication, the terminal sends the identity information of the terminal to the network device, so that the sent identity information can be associated with the URAT data. When receiving data, the network device may determine, based on the identity information of the terminal associated with the URAT data, which terminal sends the received URAT data.

In this embodiment of the present disclosure, the identity information sent from the terminal to the network device includes the identity of the terminal, and therefore, the network device may accurately determine the identity of the terminal based on the terminal identifier, thereby ensuring the reliability of subsequent communication.

Referring to FIG. 2, FIG. 2 is a second flowchart of an information processing method according to an embodiment of the present disclosure, as shown in FIG. 2, including the following steps:
Step 201: receiving identity information from a terminal by a network device.

The identity information includes a terminal identifier; or, the identity information includes a first field, a terminal identifier, and a second field, and the first field indicates one or more of the following: whether the identity information includes the second field; the content of the second field.

For details about identity information, reference may be made to the description of the foregoing embodiments.

In this step, the network device may receive the identity information from the terminal before the URAT or during the URAT.

Specifically, the network device may receive the identity information from the terminal on the SRBO through an RRC message before the URAT. In this case, the network device may further receive the scrambled UART data from the terminal, and when the authentication of the identity information is passed, the network device descrambles the scrambled UART data by using some or all of the identity information.

In the embodiments of the present disclosure, the manner in which the network device authenticates the identity information is not limited, and any authentication manner that can be used by the network device may be used.

Specifically, the network device may receive the URAT data from the terminal, obtain the identity information from the preamble portion of the URAT data, or obtain the identity information from the PUSCH data portion of the URAT data.

If the network device obtains the identity information from the preamble portion of the URAT data, the network device may receive the scrambled PUSCH data from the terminal, and descramble the scrambled PUSCH data by using some or all of the identity information, so that after descrambling, correspondence between the identity information of the terminal and the PUSCH data may be performed.

In an actual application, a pre-agreed manner may be used to agree on whether to scramble some or all of the PUSCH data by the terminal through the identity information. Optionally, a scrambling manner used by the terminal may be notified to the network device by the terminal. Optionally, the terminal may also adopt a default manner. Correspondingly, the network device may use some or all of the identity information to descramble the scrambled PUSCH data with reference to the scrambling manner of the terminal side.

If the preamble portion carries one or more pieces of identity information of one or more terminals, the network device may obtain one or more pieces of identity information of one or more terminals at the same time, and may authenticate the one or more pieces of identity information. If the identity information of the plurality of terminals is obtained at the same time, the network device may respectively descramble the subsequently obtained scrambled UART data by using the identity information of the plurality of terminals, so as to accurately determine the UART data of the plurality of terminals after the descrambling succeeds.

In this embodiment of the present disclosure, the identity information from the terminal to the network device includes the identity of the terminal, and therefore, the network device may accurately determine the identity of the terminal based on the terminal identifier, thereby ensuring the reliability of subsequent communication.

Optionally, on the basis of the foregoing embodiment, if the identity information includes the first field, the terminal identifier, and the second field, the network device may further determine the content of the second field based on the first field, so as to normally perform subsequent communication.

In an embodiment of the present disclosure, the identity information of the terminal is sent before the URAT communication process.

As shown in FIG. 3, before performing the URAT communication process, the terminal device in the RRC_IDLE state may first send the identity information of the terminal based on the SRBO (for example, the identity information may be sent by using a Common Control Channel (CCCH)), for the purpose of determining the identity of the terminal by the network device. Further, the terminal may use all or part of the identity information of the terminal to scramble the PUSCH data sent in the URAT communication process, for example, may scramble the PUSCH data, or scramble the CRC check bits of the PUSCH data. When receiving and processing in the URAT communication process, the network device descrambles the PUSCH data according to the received identity information of the terminal, and if the descrambling succeeds, the network device may match the PUSCH data with the identity information of the terminal, that is, the network device may determine which terminal device sends the PUSCH data.

Specifically, the terminal sends the identity information of the terminal through the RRC message on the SRBO. The terminal scrambles the to-be-sent URAT data by using some or all of the identity information of the terminal, and sends the scrambled URAT data to the network device. The RRC message may be a reused existing RRC message, for example, may be an RRC setup request message (RRCSetupRequest); or a new RRC message that is used to carry identity information of the terminal in the URAT communication, for example, an RRC URAT request (RRCURATRequest).

The network device receives the RRC message on the SRBO to obtain the identity information of the terminal. The network device performs identification and authentication of the terminal based on the received identity information of the terminal. The network device receives the URAT data on the time-frequency resource for URAT reception, and descrambles the received URAT data by using the authenticated identity information of the terminal. If the descrambling succeeds, the received URAT data may correspond to the terminal after data reception is completed.

If the network device receives at the same time the RRC messages sent by the plurality of terminals, the network device receives the identity information of the plurality of terminals, for example, identity information of six terminals of the UE identity (UE ID) 0 to UE ID 5. The network device may separately identify and authenticate the identity information of the six terminals, and then obtain identity information of the X (X ≤ 6) terminals that have passed the authentication, that is, corresponding data receiving processing needs to be performed, and for a terminal that does not pass the authentication, data reception processing may not be performed. When the URAT data sent by the plurality of terminals is received at the same time, the data may be descrambled based on the identity information of the authenticated terminal, so that the URAT data corresponds to the identity information of the terminal, that is, which terminal sends the URAT data may be determined.

In an embodiment of the present disclosure, the identity information of the terminal is sent in the URAT communication process.

The sending of the identity information of the terminal may be combined with the sending of the URAT data, and when the URAT data is sent, the sending of the identity information of the terminal is completed. Considering that the URAT data may be divided into a preamble part and a PUSCH data part, correspondingly, the transmission of the identity information of the terminal may also be carried in the preamble, or carried in the PUSCH data.

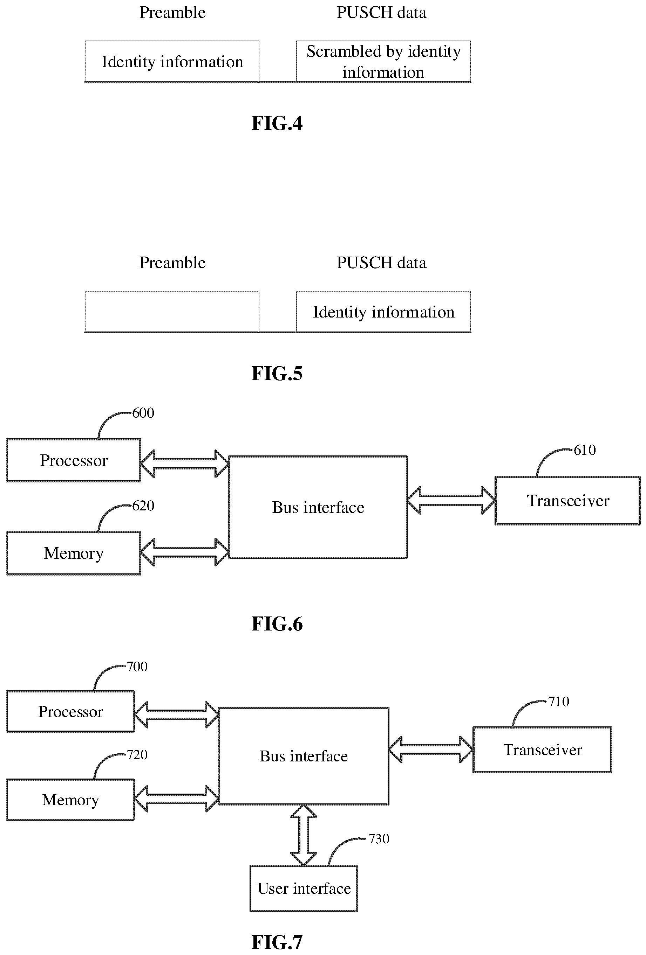

FIG. 4 is a schematic diagram that identity information of a terminal is carried in a preamble. In a specific application, the preamble used in the URAT communication may be determined based on the identity information of the terminal, and meanwhile, part or all of the identity information of the terminal is used to scramble the PUSCH data to be sent. The identity information of the terminal is carried in the preamble, which can uniquely identify the terminal device, the PUSCH data is scrambled by using some or all of the identity information of the terminal, and can associate the preamble with the PUSCH data.

Specifically, the terminal determines the used preamble based on the identity information of the terminal, and sends the preamble. The terminal uses some or all of the identity information of the terminal to scramble the PUSCH data to be sent, and sends the scrambled PUSCH data to the network device.

The mapping relationship between the identity information of the terminal and the preamble may include any one of the following:

Manner 1: The identity information of the terminal is mapped to the preamble in a one-to-one mapping relationship, and in this case, each preamble can uniquely correspond to identity information of one terminal. For example, the identity information of the terminal is 32 bits, corresponding to 2³² different preambles.

Manner 2: The identity information of the terminal is mapped to the preamble in a many-to-one mapping relationship. This manner can save the resource overhead of the preamble. For example, there are 512 different terminals in total, 64 preambles are shared, the identity information of 512 terminals may be associated with 64 preambles, for example, the identity information of the terminal may be modulo the number of preambles to obtain a preamble index corresponding to the identity information of the terminal. In this way, the identity information of each terminal corresponds to a unique preamble, and each preamble corresponds to identity information of 8 terminals. Therefore, when the network device receives the preamble, each received preamble corresponds to the identity information of the eight possible terminals. The network device may first identify and authenticate the eight terminals, and then obtain identity information of the X (X ≤ 8) terminals that have passed the authentication. Then, the network device descrambles the data based on the identity information of the X terminals. When descrambling of the data is completed, it may be determined that the data is data corresponding to which terminal of the X possible terminals.

The network device receives the preamble from the terminal, and determines the identity information of the corresponding terminal according to the received preamble. The network device performs identification and authentication based on the determined identity information of the terminal. The network device receives the URAT data on the time-frequency resource for URAT reception, and descrambles the URAT data based on the identity information of the authenticated terminal. If the descrambling succeeds, after the data descrambling is completed, the URAT data may be associated with the identity information of the terminal to determine the terminal sending the URAT data.

FIG. 5 is a schematic diagram that identity information of a terminal is carried in PUSCH data. The terminal may directly use a corresponding bit in the to-be-sent PUSCH data to send identity information of the terminal. The identity information of the terminal may be sent at the beginning or end of the PUSCH data.

In this manner, no matter whether the terminal device can pass the identification and authentication of the network device, the network device needs to firstly receive and process the URAT communication.

It can be learned from the foregoing description that, in the embodiments of the present disclosure, the terminal sends the identity information to the network device, so that the network device can uniquely determine the identity of the terminal. Further, considering the multiple-to-one mapping between the identity information of the terminal and the preamble, the size of the preamble candidate pool can be reduced, the detection complexity of the preamble can be reduced, and the preamble performance can be improved.

The technical solutions provided in the embodiments of the present disclosure may be applicable to various systems, especially 5G systems. For example, the applicable system may be a Global System of Mobile Communication (GSM) system, a Code Division Multiple Access (CDMA) system, a Wideband Code Division Multiple Access (WCDMA) system, a Long Term Evolution (LTE) system, a Long Term Evolution Advanced (LTE-A) system, a Universal Mobile Telecommunication System (UMTS), a Worldwide Interoperability for Microwave Access (LTE-A) system, a 5G new radio (NR) system, and the like. The plurality of systems each include a terminal device and a network device. The system may further include a core network part, for example, an Evolved Packet System (EPS), a 5G system (5G System, 5 GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in the embodiments of the present disclosure may be a network device (a Base Transceiver Station, BTS) in a Global System for Mobile Communications (GSM) or a Code Division Multiple Access (Code Division Multiple Access, CDMA), or may be a 5G base station in a Long Term Evolution (LTE) system, a relay node, a home base station (Femto), a pico base station (Pico), or the like, which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be two-dimensional MIMO (2D-MIMO), three-dimensional MIMO (3D-MIMO), full dimension MIMO (FD-MIMO) or super-large-scale MIMO (Massive-MIMO), or diversity transmission or precoding transmission or beamforming transmission, according to the form and quantity of the root antenna combination.

As shown in FIG. 6, an information processing apparatus according to an embodiment of the present disclosure is applied to a network device, and includes: a processor 600, configured to read a program in a memory 620 to perform the following processes: receiving identity information from a terminal, wherein the identity information includes a terminal identifier; or, the identity information includes a first field, a terminal identifier, and a second field, and the first field indicates one or more of the following: whether the identity information includes the second field; the content of the second field; wherein the transceiver 610 is configured to send and receive data under the control of the processor 600.

In FIG. 6, the bus architecture may include any number of interconnected buses and bridges, and specifically, various circuits of one or more processors represented by the processor 600 and a memory represented by the memory 620 are linked together. The bus architecture may also link various other circuits, such as a peripheral device, a voltage regulator, and a power management circuit, which are well known in the art, and therefore are not further described herein. The bus interface provides an interface. The transceiver 610 may be a plurality of elements, including a transmitter and a receiver, and provides units for communicating with various other apparatuses on a transmission medium. The processor 600 is responsible for managing the bus architecture and general processing, and the memory 620 may store data used by the processor 600 when performing operations.

The processor 600 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 600 is responsible for managing the bus architecture and general processing, and the memory 620 may store data used by the processor 600 when performing operations.

The processor 600 further reads the program, and performs the following steps: receiving the identity information from the terminal before or during URAT.

The processor 600 further reads the program, and performs the following steps: receiving the identity information from the terminal through an RRC message on SRB 0 before the URAT.

The processor 600 further reads the program, and performs the following steps: receiving scrambled UART data from the terminal; when authentication of the identity information is passed, descrambling the scrambled UART data by using some or all of the identity information.

The processor 600 further reads the program, and performs the following steps: receiving URAT data from the terminal; obtaining the identity information from a preamble portion of the URAT data, or obtaining the identity information from a PUSCH data portion of the URAT data.

Optionally, the preamble portion carries identity information of one or more terminals.

The processor 600 further reads the program, and performs the following steps: receiving scrambled PUSCH data from the terminal; descrambling the scrambled PUSCH data by using some or all of the identity information.

When the identity information includes the first field, the terminal identifier, and the second field, the processor 600 further reads the program, and performs the following steps: determining content of the second field according to the first field.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 7, an information processing apparatus according to an embodiment of the present disclosure is applied to a terminal, and includes: a processor 700, configured to read a program in a memory 720 to perform the following processes: sending identity information of the terminal to a network device, wherein the identity information includes a terminal identifier; or, the identity information includes a first field, a terminal identifier, and a second field, and the first field indicates one or more of the following: whether the identity information includes the second field; the content of the second field; the transceiver 710 is configured to send or receive data under the control of the processor 700.

In FIG. 7, the bus architecture may include any number of interconnected buses and bridges, and specifically, various circuits of one or more processors represented by the processor 700 and a memory represented by the memory 720 are linked together. The bus architecture may also link various other circuits, such as a peripheral device, a voltage regulator, and a power management circuit, which are well known in the art, and therefore are not further described herein. The bus interface provides an interface. The transceiver 710 may be a plurality of elements, that is, include a transmitter and a receiver, and provide units for communicating with various other apparatuses on a transmission medium. For different user equipment, the user interface 730 may also be an interface capable of being externally connected to the internal required device, and the connected device includes but is not limited to a keypad, a display, a speaker, a microphone, a joystick, and the like.

The processor 700 is responsible for managing the bus architecture and general processing, and the memory 720 may store data used by the processor 700 when performing operations.

The processor 700 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory, and is configured to perform any one of the methods provided in the embodiments of the present disclosure according to the obtained executable instruction. The processor and the memory may also be physically separated.

The processor 700 further reads the program, and performs the following steps: sending the identity information of the terminal to the network device before or during URAT.

The processor 700 further reads the program, and performs the following steps: scrambling to-be-sent UART data by using some or all of the identity information; sending the scrambled UART data to the network device.

The processor 700 further reads the program, and performs the following steps: sending the identity information to the network device through a RRC message on a SRB 0.

The processor 700 further reads the program, and performs the following steps: sending URAT data to the network device, wherein a preamble portion of the URAT data carries the identity information, or a physical uplink shared channel (PUSCH) data portion of the URAT data carries the identity information..

The processor 700 further reads the program, and performs the following steps: scrambling the PUSCH data portion of the URAT data by using some or all of the identity information.

Optionally, the preamble portion carries the identity information of one or more terminals.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

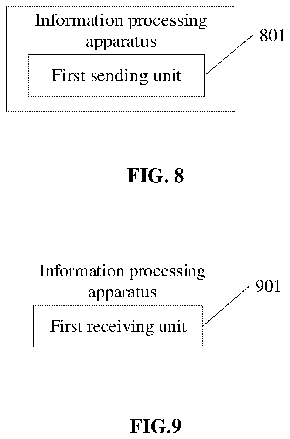

As shown in FIG. 8, an information processing apparatus according to an embodiment of the present disclosure is applied to a terminal and includes: a first sending unit 801, configured to send identity information of the terminal to a network device, wherein the identity information includes a terminal identifier; or, the identity information includes a first field, a terminal identifier, and a second field, and the first field indicates one or more of the following: whether the identity information includes the second field; content of the second field.

Optionally, the first sending unit 801 is further configured to send the identity information of the terminal to the network device before or during URAT.

Optionally, the apparatus may further include: a first processing unit, configured to scramble to-be-sent UART data by using some or all of the identity information; and a second sending unit, configured to send the scrambled UART data to the network device.

Optionally, the first sending unit 801 further sends the identity information to the network device through an RRC message on the SRB 0.

Optionally, the first sending unit 801 further sends URAT data to the network device, wherein a preamble portion of the URAT data carries the identity information, or a physical uplink shared channel (PUSCH) data portion of the URAT data carries the identity information.

Optionally, the apparatus may further include: a second processing unit, configured to scramble the PUSCH data portion of the URAT data by using some or all of the identity information.

Optionally, the preamble portion carries the identity information of one or more terminals.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

As shown in FIG. 9, an information processing apparatus according to an embodiment of the present disclosure is applied to a network device, and includes: a first receiving unit 901, configured to receive identity information from a terminal, wherein the identity information includes a terminal identifier; or, the identity information includes a first field, a terminal identifier, and a second field, and the first field indicates one or more of the following: whether the identity information includes the second field; content of the second field.

Optionally, the first receiving unit 901 further receives the identity information from the terminal before the URAT or during the URAT.

Optionally, the first receiving unit 901 further receives the identity information from the terminal on the SRB 0 through an RRC message before the URAT.

Optionally, the apparatus may further include: a second receiving unit, configured to receive the scrambled UART data from the terminal; and a first processing unit configured to descramble the scrambled UART data by using some or all of the identity information when the authentication of the identity information is passed.

Optionally, the first receiving unit 901 may include: a first receiving subunit, configured to receive URAT data from the terminal; and a first obtaining subunit configured to obtain the identity information from a preamble portion of the URAT data, or the network device obtains the identity information from a PUSCH data portion of the URAT data.

Optionally, the preamble portion carries identity information of one or more terminals.

Optionally, the apparatus may further include: a third receiving unit, configured to receive scrambled PUSCH data from the terminal; a second processing unit, configured to descramble the scrambled PUSCH data by using some or all of the identity information

Optionally, when the identity information includes the first field, the terminal identifier, and the second field, the apparatus may further include: a third processing unit, configured to determine the content of the second field according to the first field.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solution of the present disclosure essentially or all or part of the technical solution that contributes to the prior art may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

It should be noted that, the apparatus provided in the embodiments of the present disclosure can implement all method steps implemented in the foregoing method embodiments, and can achieve the same technical effect, and details of the same parts and beneficial effects as those in the method embodiments in this embodiment are not described herein again.

An embodiment of the present disclosure further provides a communication device, including: a memory, a processor, and a program stored in the memory and executable on the processor, where the processor, when executing the program, implements the steps in the information processing method as described above.

An embodiment of the present disclosure further provides a processor-readable storage medium, where a program is stored on a readable storage medium, and when the program is executed by a processor, each process of the foregoing information processing method embodiment is implemented, and the same technical effect can be achieved. The readable storage medium may be any usable medium or data storage device accessible by a processor, including but not limited to a magnetic memory (for example, a floppy disk, a hard disk, a magnetic tape, a magneto-optical disk (DVD), a Blu-ray disk (CD), a Digital Versatile Disk (DVD), a Blu-ray Disk (BD), a High-Definition Versatile Disk (EEPROM), a non-volatile memory (NAND Flash), a Solid State Disk (Solid State Disk or Solid State Drive, SSD), etc.).

It should be noted that, in this specification, the terms "include", "comprise", or any other variant thereof are intended to cover non-exclusive inclusion, so that a process, method, article, or apparatus that includes a series of elements includes not only those elements, but also other elements that are not explicitly listed, or elements inherent to the process, method, article, or apparatus. In the absence of more restrictions, the statement "includes one" does not exclude that there are no additional identical elements in the process, method, article, or apparatus that includes the element.

Through the description of the foregoing implementations, a person skilled in the art may clearly understand that the method in the foregoing embodiments may be implemented by means of software plus a necessary general hardware platform, and certainly may also be implemented by hardware, but in many cases, the former is a better implementation. According to such an understanding, the technical solution of the present disclosure essentially or the part contributing to the prior art may be embodied in the form of a software product, and the computer software product is stored in a storage medium (such as a ROM/RAM, a magnetic disk, and an optical disk), and includes several instructions for enabling a terminal (which may be a mobile phone, a computer, a server, an air conditioner, a network device, etc.) to perform the method according to the embodiments of the present disclosure.

The embodiments of the present disclosure are described above with reference to the accompanying drawings, but the present disclosure is not limited to the specific embodiments described above, and the specific embodiments described above are merely illustrative, rather than limiting, and a person of ordinary skill in the art can make many forms without departing from the spirit of the present disclosure and the scope of the claims, all of which are within the protection of the present disclosure.

## Claims

1. An information processing method applied to a terminal, the method comprising:
sending identity information of the terminal to a network device, wherein the identity information comprises a terminal identifier; or, the identity information comprises a first field, a terminal identifier, and a second field, and the first field indicates one or more of the following: whether the identity information comprises the second field; content of the second field;
wherein sending the identity information of the terminal to the network device comprises:
sending the identity information of the terminal to the network device before or during uncoordinated random access and transmission (URAT).

2. The method according to claim 1, wherein when sending the identity information of the terminal to the network device before the URAT, the method further comprises:
scrambling to-be-sent UART data by using some or all of the identity information;
sending the scrambled UART data to the network device.

3. The method according to claim 1, wherein when sending the identity information of the terminal to the network device before the URAT, sending the identity information of the terminal to the network device comprises:
sending the identity information to the network device through a radio resource control (RRC) message on a signaling radio bearer 0 (SRB 0).

4. The method according to claim 1, wherein when sending the identity information of the terminal to the network device during the URAT, sending the identity information of the terminal to the network device comprises:
sending URAT data to the network device, wherein a preamble portion of the URAT data carries the identity information, or a physical uplink shared channel (PUSCH) data portion of the URAT data carries the identity information.

5. The method according to claim 4, wherein when the preamble portion of the URAT data carries the identity information, the method further comprises:
scrambling the PUSCH data portion of the URAT data by using some or all of the identity information.

6. The method according to claim 4, wherein the preamble portion carries the identity information of one or more terminals.

7. An information processing method applied to a network device, the method comprising:
receiving identity information from a terminal, wherein the identity information comprises a terminal identifier; or, the identity information comprises a first field, a terminal identifier, and a second field, and the first field indicates one or more of the following: whether the identity information comprises the second field; the content of the second field;
wherein receiving the identity information from the terminal comprises:
receiving the identity information from the terminal before or during URAT.

8. The method according to claim 7, wherein receiving the identity information from the terminal before the URAT comprises:
receiving the identity information from the terminal through an RRC message on SRB 0 before the URAT.

9. The method according to claim 7, wherein the method further comprises:
receiving scrambled UART data from the terminal;
when authentication of the identity information is passed, descrambling the scrambled UART data by using some or all of the identity information.

10. The method according to claim 7, wherein receiving the identity information from the terminal during the URAT by the network device comprises:
receiving URAT data from the terminal;
obtaining the identity information from a preamble portion of the URAT data, or obtaining the identity information from a PUSCH data portion of the URAT data.

11. The method according to claim 10, wherein the preamble portion carries identity information of one or more terminals.

12. The method according to claim 10, wherein when obtaining the identity information from the preamble portion of the URAT data, the method further comprises:
receiving scrambled PUSCH data from the terminal;
descrambling the scrambled PUSCH data by using some or all of the identity information.

13. The method according to claim 7, wherein when the identity information comprises the first field, the terminal identifier, and the second field, the method further comprises:
determining content of the second field according to the first field.

14. An information processing apparatus applied to a terminal, wherein the apparatus comprises a memory, a transceiver, and a processor;
the memory is configured to store a computer program, the transceiver is configured to transmit and receive data under control of the processor; and the processor is configured to read the computer program in the memory and perform following operations:
sending identity information of the terminal to a network device, wherein the identity information comprises a terminal identifier; or, the identity information comprises a first field, a terminal identifier, and a second field, and the first field indicates one or more of the following: whether the identity information comprises the second field; the content of the second field;
wherein sending the identity information of the terminal to the network device comprises: sending the identity information of the terminal to the network device before or during URAT.

15. The apparatus according to claim 14, wherein when sending the identity information of the terminal to the network device before the URAT, the processor reads the program and executes the following steps:
scrambling to-be-sent UART data by using some or all of the identity information;
sending the scrambled UART data to the network device.

16. The apparatus according to claim 14, wherein when sending the identity information of the terminal to the network device before the URAT, the processor reads the program and executes the following steps:
sending the identity information to the network device through a RRC message on a SRB 0.

17. The apparatus according to claim 14, wherein when sending the identity information of the terminal to the network device during the URAT, the processor reads the program and executes the following steps:
sending URAT data to the network device, wherein a preamble portion of the URAT data carries the identity information, or a physical uplink shared channel (PUSCH) data portion of the URAT data carries the identity information.

18. The apparatus according to claim 17, wherein when the preamble portion of the URAT data carries the identity information, the processor reads the program and executes the following steps:
scrambling the PUSCH data portion of the URAT data by using some or all of the identity information.

19. The apparatus according to claim 17, wherein the preamble portion carries the identity information of one or more terminals.

20. An information processing apparatus applied to a network device, wherein the apparatus comprises a memory, a transceiver, and a processor,
the memory is configured to store a computer program; the transceiver is configured to transmit and receive data under control of the processor; and the processor configured to read the computer program in the memory and perform the following operations:
receiving identity information from a terminal, wherein the identity information comprises a terminal identifier; or, the identity information comprises a first field, a terminal identifier, and a second field, and the first field indicates one or more of the following: whether the identity information comprises the second field; the content of the second field;
wherein receiving the identity information from the terminal comprises:
receiving the identity information from the terminal before or during URAT.

21. The apparatus according to claim 20, wherein the processor reads the program and executes the following steps:
receiving the identity information from the terminal through an RRC message on SRB 0 before the URAT.

22. The apparatus according to claim 20, wherein the processor reads the program and executes the following steps:
receiving scrambled UART data from the terminal;
when authentication of the identity information is passed, descrambling the scrambled UART data by using some or all of the identity information.

23. The apparatus according to claim 20, wherein the processor reads the program and executes the following steps:
receiving URAT data from the terminal;
obtaining the identity information from a preamble portion of the URAT data, or obtaining the identity information from a PUSCH data portion of the URAT data.

24. The apparatus according to claim 23, wherein the preamble portion carries identity information of one or more terminals.

25. The apparatus according to claim 23, wherein when obtaining the identity information from the preamble portion of the URAT data, the processor reads the program and executes the following steps:
receiving scrambled PUSCH data from the terminal;
descrambling the scrambled PUSCH data by using some or all of the identity information.

26. The apparatus according to claim 20, wherein when the identity information comprises the first field, the terminal identifier, and the second field, the processor reads the program and executes the following steps:
determining content of the second field according to the first field.

27. An information processing apparatus applied to a terminal, wherein the apparatus comprises:
a first sending unit, configured to send identity information of the terminal to a network device, wherein the identity information comprises a terminal identifier; or, the identity information comprises a first field, a terminal identifier, and a second field, and the first field indicates one or more of the following: whether the identity information comprises the second field; content of the second field;
the first sending unit is further configured to send the identity information of the terminal to the network device before or during URAT.

28. The apparatus according to claim 27, wherein the apparatus further comprises:
a first processing unit, configured to scramble to-be-sent UART data by using some or all of the identity information;
a second sending unit, configured to send the scrambled UART data to the network device.

29. The apparatus according to claim 27, wherein the first sending unit is further configured to sending the identity information to the network device through a RRC message on SRB 0.

30. The apparatus according to claim 27, wherein the first sending unit is further configured to send URAT data to the network device, wherein a preamble portion of the URAT data carries the identity information, or a physical uplink shared channel (PUSCH) data portion of the URAT data carries the identity information.

31. The apparatus according to claim 30, wherein the apparatus further comprises:
a second processing unit, configured to scramble the PUSCH data portion of the URAT data by using some or all of the identity information.

32. The apparatus according to claim 30, wherein the preamble portion carries the identity information of one or more terminals.

33. An information processing apparatus applied to a network device, wherein the apparatus comprises:
a first receiving unit, configured to receive identity information from a terminal, wherein the identity information comprises a terminal identifier; or, the identity information comprises a first field, a terminal identifier, and a second field, and the first field indicates one or more of the following: whether the identity information comprises the second field; content of the second field:
wherein the first receiving unit is further configured to receive the identity information from the terminal before or during URAT.

34. The apparatus according to claim 33, wherein the first receiving unit is further configured to receiving the identity information from the terminal through an RRC message on SRB 0 before the URAT..

35. The apparatus according to claim 33, wherein the apparatus further comprises:
a second receiving unit, configured to receive scrambled UART data from the terminal;
a first processing unit configured to when authentication of the identity information is passed, descramble the scrambled UART data by using some or all of the identity information.

36. The apparatus according to claim 33, wherein the first receiving unit further comprises:
a first receiving subunit, configured to receiving URAT data from the terminal;
a first obtaining subunit, configured to obtain the identity information from a preamble portion of the URAT data, or obtain the identity information from a PUSCH data portion of the URAT data.

37. The apparatus according to claim 36, wherein the preamble portion carries identity information of one or more terminals.

38. The apparatus according to claim 36, wherein the apparatus further comprises:
a third receiving unit, configured to receive scrambled PUSCH data from the terminal;
a second processing unit, configured to descramble the scrambled PUSCH data by using some or all of the identity information.

39. The apparatus according to claim 33, wherein when the identity information comprises the first field, the terminal identifier, and the second field, the apparatus further comprises:
a third processing unit, configured to determine content of the second field according to the first field.

40. A processor-readable storage medium, wherein the processor-readable storage medium stores a computer program, and the computer program causes a processor to execute the method according to any one of claims 1 to 13.
